# EUROPEAN PATENT APPLICATION

(11) **EP 3 318 892 A1**
(43) Date of publication of application: **09.05.2018**
(21) Application number: 17165307.4
(22) Date of filing: 06.04.2017
(51) Int. Cl.: G01S 13/56, G01S 13/86, G01S 13/88, G08B 13/181, G08B 13/191

(54) **SURVEILLANCE CAMERA**

(30) Priority: 08.11.2016 CN 201610981809
(71) Applicant: Tianjin Hualai Technology Co., Ltd., Tianjin 300190 (CN)
(72) Inventor: ZHANG, Jie, Nankai District, Tianjin 300190 (CN)
(74) Representative: ABG Patentes, S.L.

(57) **Abstract**

A surveillance camera provided in embodiments of the present disclosure combines a pyroelectric infrared sensor and a Doppler radar detector into a movement detection module, therefore solving the technical problem that a surveillance is of low environmental adaptability and less accuracy in detecting a moving human body. The detection camera according to an embodiment of the present disclosure comprises a processor, a movement detection module, a video acquisition module, a storage module and a network module that are respectively connected with the processor. The movement detection module comprises a pyroelectric infrared sensor and a Doppler radar detector; the pyroelectric infrared sensor, upon detecting infrared image information, outputs a pyroelectric infrared signal; and the Doppler radar detector, upon detecting Doppler reflection image information, outputs a Doppler reflection signal.

## Description

### TECHNICAL FIELD

The present disclosure relates to the technical field of electronic surveillance and specifically relates to a surveillance camera.

### BACKGROUND

A surveillance camera is an electronic surveillance device that is commonly used in a family or at public places such as banks, shopping malls, museums as well as industrial and mining enterprises. As a triggering source, a detection sensor is a primary component in a surveillance camera. To better detect movement of a human body in an image recorded by a camera, a conventional surveillance camera generally employs a pyroelectric infrared sensor as a detection sensor. A pyroelectric infrared sensor can detect infrared lines radiated by a human body in a non-contact form, and has high directionality and thus can effectively detect movement of a living thing. However, the pyroelectric infrared sensor is highly prone to interferences due to environmental changes, for example, a false triggering of the pyroelectric infrared sensor may occur due to factors such as hot air, direct exposure to sunlight or environmental temperature, and the sensitivity of the pyroelectric infrared sensor may decrease as temperature increases, which seriously influences detection sensitivity and accuracy of the pyroelectric infrared sensor in detecting movement of a human body.

A Doppler radar detector is designed according to the principle of Doppler theory, that is, when a radio wave in advancing process encounters an object, the radio wave will be reflected, and the frequency of the reflected wave will change according to the moving status of the encountered object. If the position of the object encountered by the radio wave is not moving, the frequency of the reflected wave should be equal to that of the transmission wave. If the object moves in the direction in which the radio wave transmits, the radio wave reflected back is compressed, that is to say, the frequency of the reflection wave will increase; otherwise, the frequency of the wave reflected back will decrease accordingly. The Doppler radar detector has the characteristic of non-contact detection as well, and will not be influenced by factors such as temperature, humidity, noise, airflow, dust or light and hence is adaptable to severe environment, and it also has relatively strong capability in resisting radio-frequency interference. However, the Doppler radar detector has low directionality and could not judge whether a moving object in a detection area is a living thing or calorific.

### SUMMARY

In view of the above, an embodiment of the present disclosure provides a surveillance camera, which combines a pyroelectric infrared sensor and a Doppler radar detector into a movement detection module, thereby solving the technical problem that the surveillance camera has low environmental adaptability and low accuracy in detecting movement of a human body.

A surveillance camera according to an embodiment of the present disclosure comprises a processor, a movement detection module, a video acquisition module, a storage module and a network module that are respectively connected with the processor, the movement detection module comprises a pyroelectric infrared sensor and a Doppler radar detector; the pyroelectric infrared sensor, upon detecting infrared image information, outputs a pyroelectric infrared signal; and the Doppler radar detector, upon detecting Doppler reflection image information, outputs a Doppler reflection signal.

In an embodiment, the video acquisition module is configured to obtain infrared images and Doppler reflection images; the storage module is configured to store the infrared image and the Doppler reflection image; the network module is configured to transmit the above images to a user terminal.

In an embodiment, the surveillance camera further comprises a micro control unit which performs logical calculus for a pyroelectric infrared signal outputted by the pyroelectric infrared sensor and a Doppler reflection signal outputted by the Doppler radar detector, if the calculus result meets a preset condition, then transmitting a triggering signal to the processor.

In an embodiment, the micro control unit is connected with the movement detection module and the processor respectively, or integrated in the movement detection module or the processor.

In an embodiment, the processor comprises a signal transmission unit, a data transmission unit and an alarm unit, wherein the signal transmission unit is configured to receive a triggering signal transmitted by the micro control unit, transmit acquisition instruction to the video acquisition module upon receiving the triggering signal, and inform the alarm unit to generate alarm information; the data transmission unit is configured to receive video data in the surveillance scenario from the video acquisition module and transmit them to the storage module for saving; the alarm unit transmits the alarm information to a user terminal via the network module.

In an embodiment, the Doppler radar detector comprises a radar transmission and reception circuit and a signal amplification circuit.

In an embodiment, the storage module is a local memory or a cloud server.

In an embodiment, the video acquisition module comprises an optical image sensor and an image compression unit.

In an embodiment, the surveillance camera further comprises: anyone or several of a display module, a loudspeaker module, an infrared illumination module, a rotary module or an external interface module, the display module, the loudspeaker module, the infrared illumination module, the rotary module or the external interface module are respectively connected with the processor, wherein: the display module is configured to display a present working state of the surveillance camera; the loudspeaker module is configured to generate an alarm sound upon receiving a triggering signal; the infrared illumination module is for fill-in infrared illumination at a surveillance area under a state of night vision or that illumination condition is not favorable; the rotary module is configured to achieve rotation of the surveillance camera around its own axle center; the external interface module is for insertion of an external device for data transmission.

In an embodiment, the rotary module comprises a micro motor and a drive mechanism that can drive the movement detection module to rotate 360 degree.

The surveillance camera provided in the embodiments of the present disclosure combines a pyroelectric infrared sensor and a Doppler radar detector into a movement detection module. Only under a case that a Doppler signal detected by the Doppler radar detector and a pyroelectric infrared signal detected by the pyroelectric infrared sensor both satisfy triggering conditions, a processor can receive a triggering signal and hence awake the camera to shoot, therefore enhancing capability of the surveillance camera in resisting environmental interferences and improving the sensitivity and accuracy of the surveillance camera in detecting movement of a human body and/or an animal.

### BRIEF DESCRIPTION OF THE DRAWINGS

FIG. 1a is a schematic diagram of a surveillance camera provided in an embodiment of the present disclosure.
FIG. 1b is a schematic diagram of a movement detection module according to an embodiment of the present disclosure.
FIG. 2 is a circuit diagram of a pyroelectric infrared sensor in a movement detection module of a surveillance camera according to an embodiment of the present disclosure.
FIGS. 3 and 4 are circuit diagrams illustrating a first part and a second part of a Doppler radar detector in a movement detection module of a surveillance camera according to an embodiment of the present disclosure respectively.
FIG. 5 is a flow chart of an operation of a movement detection module of a surveillance camera according to an embodiment of the present disclosure.
FIG. 6 is a schematic diagram of a surveillance camera according to another embodiment of the present disclosure.

### DETAILED DESCRIPTION

The technical solutions in the embodiments of the present disclosure will be described in a clearly and fully understandable way in connection with the drawings related to the embodiments of the disclosure. Apparently, the described embodiments are just a part but not all of the embodiments of the disclosure. Based on the described embodiments herein, those skilled in the art can obtain other embodiments, without any inventive work, which should be within the scope of the disclosure.

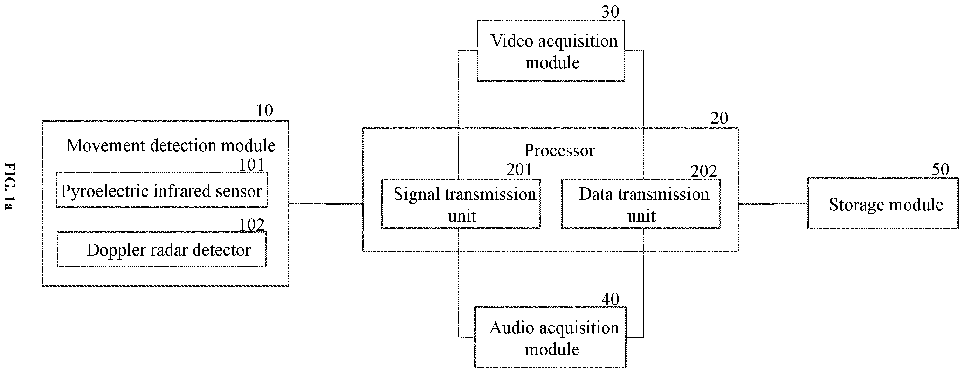

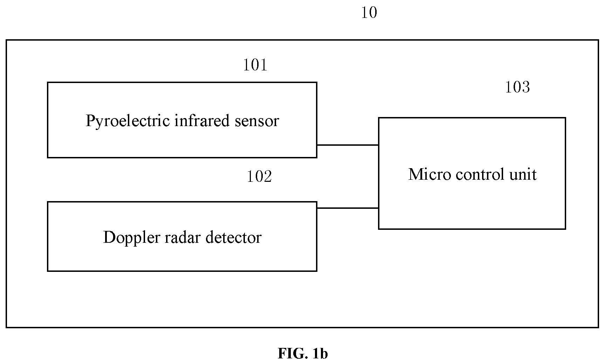

FIG. 1a is a schematic diagram of a surveillance camera according to an embodiment of the present disclosure. As illustrated in FIG. 1a, a surveillance camera comprises a processor 20, and a movement detection module 10, a video acquisition module 30, a storage module 50 and a network module (not illustrated in FIG. 1) that are respectively connected with the processor 20. The movement detection module 10 comprises a pyroelectric infrared sensor 101 and a Doppler radar detector 102. Here, the pyroelectric infrared sensor 101 is used for detecting a pyroelectric infrared signal in a surveillance scenario, and the Doppler radar detector 102 is used for detecting a Doppler reflection signal in the surveillance scenario. A video acquisition module 30 is configured to obtain a video image, such as an infrared image detected by the pyroelectric infrared sensor 101 and a Doppler reflection image detected by the Doppler radar detector 102. The storage module 50 is configured to storage the image information obtained by the video acquisition module 30. The network module, which can be anyone or both of a wired network module and a wireless network module, is configured to transmit the image information to, for example, a user terminal. As illustrated in FIG. 1a, the surveillance camera further comprises an audio acquisition module 40. FIG. 1b is a schematic diagram of a movement detection module according to an embodiment of the present disclosure. Additionally, in a structure illustrated in FIG. 1b, a micro control unit 103 is electrically connected with a pyroelectric infrared sensor 101 and a Doppler radar detector 102. In addition, the micro control unit 103 is also electrically connected with the processor 20.

In most embodiments described below, a surveillance camera is provided inside both a video acquisition module and an audio acquisition module. However, to realize functions of the present disclosure, a person skilled in the art should understand that an audio acquisition module is by no means an indispensable part.

The micro control unit 103 is configured to perform logical calculus (such as logical and calculus) for the pyroelectric infrared signal outputted by the pyroelectric infrared sensor 101 and the Doppler reflection signal outputted by the Doppler radar detector 102. If the calculus result satisfies a preset condition, the micro control unit 103 transmits a triggering signal to the processor 20 to awake the camera. That is, when the detected pyroelectric infrared signal and Doppler reflection signal both meet the triggering condition, the processor 20 can be triggered to awake the surveillance camera to perform acquisition of video data and optionally audio data. In an embodiment of the present disclosure, the micro control unit 103 is an independent unit, and is respectively connected with the movement detection module 10 and the processor 20. Alternatively, the micro control unit 103 may be integrated in the movement detection module 10, which is shown in FIG. 1b, or the processor 20. The position of the micro control unit 103 is not limited thereto.

In the most embodiments described hereinafter, the surveillance camera is provided with both a video acquisition module and an audio acquisition module, however, those skilled in the art should understand that, in order to achieve the functions of the present disclosure, the audio acquisition module is not an indispensable part in the surveillance camera, hence a limitative explanation should not be made.

In an embodiment of the present disclosure, the processor 20 comprises a signal transmission unit 201, a data transmission unit 202 and an alarm unit (not shown). The signal transmission unit 201 is configured to receive a triggering signal from the micro control unit 103 and transmit acquisition instructions to the video acquisition module 30 and the audio acquisition module 40 respectively upon receiving the triggering signal and meanwhile inform the alarm unit to generate alarm information. The data transmission unit 202 is configured to receive video data and audio data in a surveillance scenario from the video acquisition module 30 and the audio acquisition module 40 respectively and transmit them to the storage module 50 for saving. The alarm unit transmits the alarm information to a user terminal via the network module.

In an embodiment of the present disclosure, the video acquisition module 30 comprises an optical image sensor and an image compression unit. The optical image sensor, which specifically can be a CCD type optical image sensor or a CMOS type optical image sensor, is used to perform acquisition of image in a surveillance area and achieve conversion from an optical signal to an electrical signal and then perform digitalization, and the digitalized signal is then transmitted to the image compression unit to form standard image data to be transmitted to the processor 20.

In an embodiment of the present disclosure, the audio acquisition module 40 comprises an audio acquisition sensor and an audio compression unit, the audio acquisition module converts audio vibration signal in a surveillance area into an electrical signal and transmits the electrical signal to the audio compression unit, by which the electrical signal is converted into digital audio signal and compressed into standard audio data to be transmitted to the processor 20.

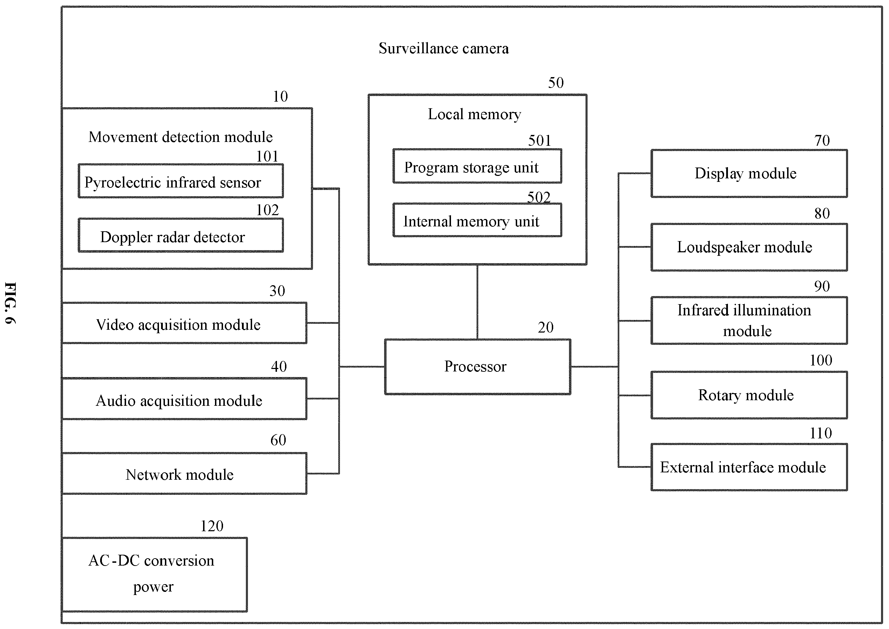

In an embodiment of the present disclosure, the storage module 50 can be a local memory or a cloud server. As illustrated in FIG. 6, when the storage module 50 is a local memory, it comprises a program storage unit 501 and an internal memory unit 502. The program storage unit 501 is used to store codes that the processor 20 necessarily executes and the internal memory unit 502 provides necessary hardware environment for running the program.

When the storage module 50 is a cloud server, it supports information push service. Under such a case, the alarm unit can transmit alarm information to the cloud server via the network module and the cloud server directly pushes the alarm information to a user terminal by the information push service. Specific function of the information push service can be provided by the supplier of the cloud server, only if corresponding parameters are properly configured and conditions for transmitting the information are satisfied, the alarm information can be pushed to a user terminal by the cloud server. For example, if the user terminal is a portable mobile device, e.g., a cell phone, after a user purchases a surveillance camera, a corresponding client software (APP) is required to be installed in the handhold mobile device and an account has to be registered in the client software with the phone number. The account is allowed to be correlated with identification of the surveillance camera and such correlation relations will be saved in the cloud server. When a moving human body or an animal appears in a surveillance area, the generated alarm information can be transmitted to the cloud server and the cloud server searches the corresponding account information according to the unique identification of the surveillance camera contained in the alarm information and pushes the alarm information to a user's potable mobile device via the push service. The alarm information can be preset specific text message such as "suspicious individual invasion".

In an embodiment of the present disclosure, the cloud server transmits the received video data and/or audio data as well as alarm information to a user terminal together. In another embodiment, a data transmission unit 202, when transmitting video data and/or audio data to the storage module 50, also transmits the video data and/or the audio data to a user terminal in real time. Therefore, a user, upon receiving the alarm information, can also observe accidental circumstances at the site of the surveillance area, which is in favor of the user for taking a timely countermeasure.

It will be specifically explained hereinafter the structure of the pyroelectric infrared sensor 101 and the Doppler radar detector 102 in the movement detection sensor 10 of a surveillance camera provided in the present disclosure, and the working mode and principle of the movement detection sensor 10.

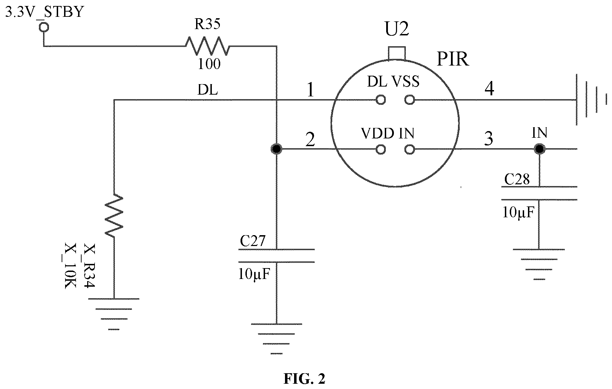

Commercial available sensors such as P228, LH1958, RE200B and HN911L can be selected for the pyroelectric infrared sensor 101. In an embodiment of the present disclosure, the pyroelectric infrared sensor 101 employs a pyroelectric infrared sensor that is digitally programmable. As illustrated in FIG. 2, U2 is a digitally programmable pyroelectric infrared sensor, leg 3 of which is for inputting set parameters such as sensitivity and output mode. The output mode can be interrupt output, wake-up output or AD value output. Leg 1 is used for output of signal. In an embodiment of the present disclosure, an interrupt output is selected as the output mode, when a pyroelectric infrared signal received by the detector head of the pyroelectric infrared sensor 101 exceeds the triggering threshold inside the detector head, judging that a moving human body/animal may exist in the surveillance area, and then a pulse will be generated inside, meanwhile, the leg 1 outputs a high level signal, and the duration of the high level is the time that the human body/animal moves.

Frequency of the Doppler radar detector 102 can be selected according to different needs and the present disclosure is not limited thereto. The Doppler radar detector 102 may comprise two parts, the first part is a radar transmission and reception circuit, and the second part is a signal amplification circuit.

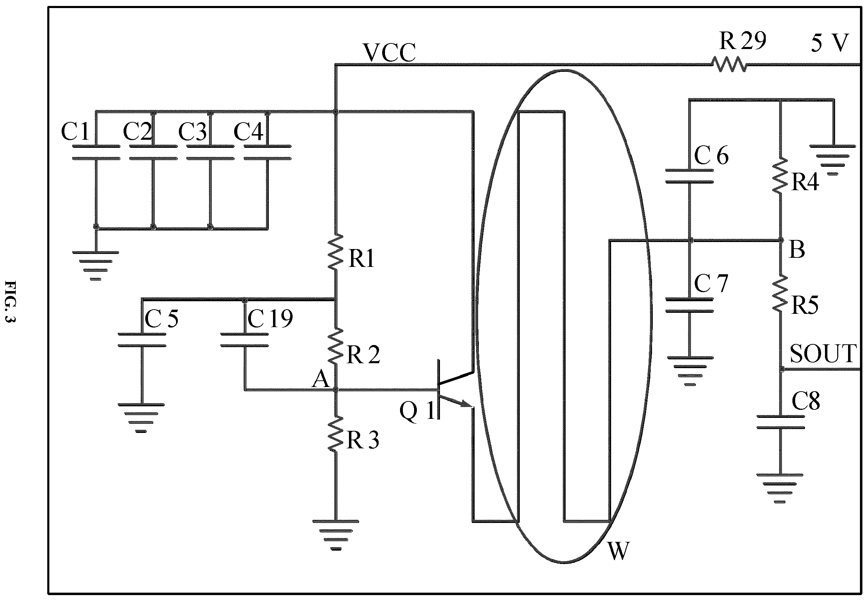

FIG. 3 is a circuit diagram of a first part of a Doppler radar detector provided in an embodiment of the present disclosure. In the embodiment, oscillation frequency of 3GHz is taken as an example, as illustrated in FIG. 3, power VCC provides a base voltage (voltage at point A) of microwave triode Q1 after being filtered through R29, C1, C2, C3 and C4 and then passing voltage division circuit of R1, R2 and R3, and point B is an emitter electrode of the microwave triode Q1. C6, C7 and antenna W form a series resonant circuit and the microwave triode Q1 generates oscillation under the function of the series resonant circuit with an oscillation frequency of about 3GHz. The antenna W radiates microwave to space around to produce a tridimensional microwave alarm field. When a human body/animal in the surveillance area does not exist, on the basis of Doppler effect of electromagnetic wave, no reflection microwave arrives at point A. Therefore, voltage oscillation amplitude at point B will not change. When a stationary human body/animal exists in the area, the reflected microwave phase changes only once, and the voltage phase received at point A will not change, so the voltage at point B will be invariantly maintained at a certain oscillation amplitude. When a human or an animal moves in the area, the reflected wave by the human or the animal will allow both the oscillation amplitude and frequency of Q1 to change via the antenna W, resulting in voltage fluctuation at point A, and the voltage at point B after being amplified via Q1 will change accordingly. The voltage at point B, after being filtrated by R5 and C8, is outputted to the second part circuit via SOUT.

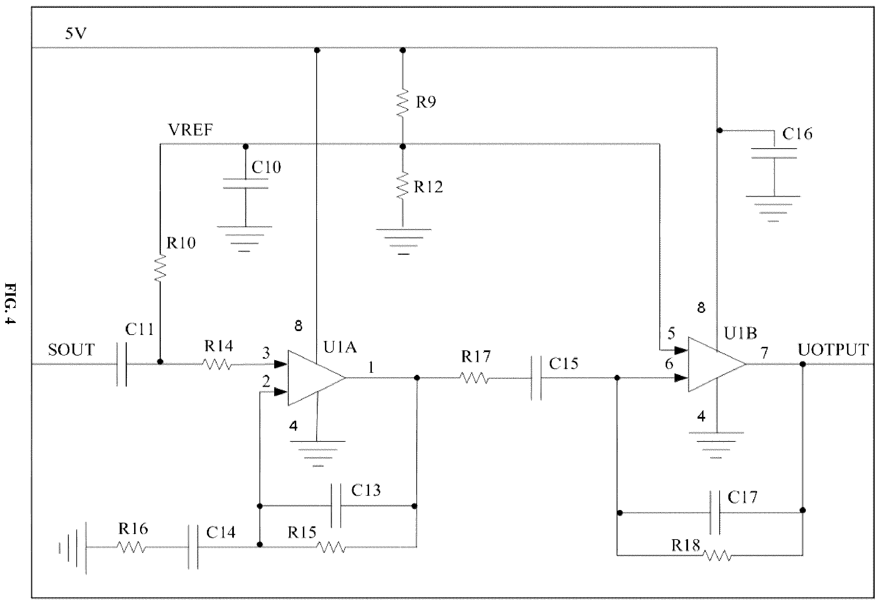

FIG. 4 is a circuit diagram of a second part of a Doppler radar detector provided in an embodiment of the present disclosure. As illustrated in FIG. 4, when the Doppler radar detector 102 does not detect a moving human body/animal in the surveillance area, OUTPUT port will output a low level signal. In contrast, when the Doppler radar detector 102 detects a moving human body/animal in the surveillance area, SOUT signal will generate a pulse square wave after being filtrated and amplified by passing two-stage band-pass filter UIA and UIB, that is, OUTPUT port will output a high level signal.

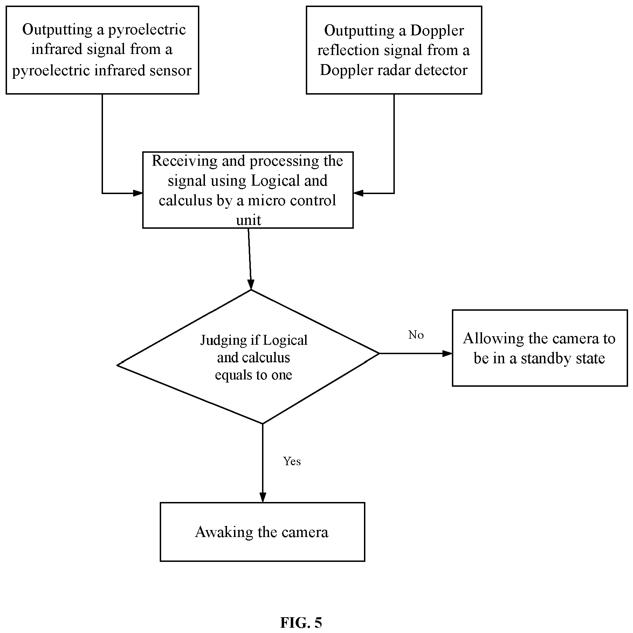

FIG. 5 is a work flow chart of the movement detection module 10 provided in an embodiment of the present disclosure. In the present embodiment, the micro control unit 103 employs a logical and calculus to process a pyroelectric infrared signal and a Doppler reflection signal, and the preset condition is that the calculus result is equal to one. As illustrated in FIG. 5, when the pyroelectric infrared sensor 101 does not detect a moving human body/animal, it outputs a low level signal which is represented with zero. The pyroelectric infrared sensor 101, when detecting a moving human body/animal, outputs a high level signal which is represented with one. However, because the pyroelectric infrared sensor 101 is prone to environmental influences, factors such as hot air, sunshine or temperature in a surveillance area may lead to outputting a high level signal as well. Similarly, the Doppler radar detector 102, when detecting a moving human body/animal, outputs a high level signal as well which is represented with one, if no moving human body/animal is detected, a low level signal represented with zero is outputted. The micro control unit 103 performs logical and calculus for a pyroelectric infrared signal outputted by the pyroelectric infrared sensor 101 and a Doppler reflection signal outputted by the Doppler radar detector 102, only under a case that both the two signals are one, that is, the signal outputted by the pyroelectric infrared sensor 101 and the signal outputted by the Doppler radar detector 102 both satisfy their respective triggering condition, the micro control unit 103 will generate a triggering signal and transmit the triggering signal to the processor 20 so as to awake the camera to shoot. Otherwise, if any one of the pyroelectric infrared sensor 101 and the Doppler radar detector 102 outputs zero, the camera will not be awaked.

The surveillance camera, provided in the embodiment of the present disclosure, combines a Doppler radar detector and a pyroelectric infrared sensor into a movement detection module, and only under a case that a Doppler reflection signal detected by the Doppler radar detector and a pyroelectric infrared signal detected by the pyroelectric infrared sensor both satisfy triggering conditions, a processor can receive a triggering signal to awake the camera to shoot, thus enhancing the capability of the surveillance camera in resisting environmental interferences, and improving sensitivity and accuracy of the surveillance camera for detecting a moving human body/an animal.

Although the above embodiments describe several modules of a surveillance camera, a person skilled in the art can understand that the division of modules is by no means a prerequisite. Actually, according to the implementation mode of the present disclosure, the characteristics and functions of two or more modules described above can be realized specifically in one module. On the contrary, the characteristics and functions of one module described above can be further divided and realized specifically by a plurality of modules.

Those skilled in the art can understand that the technical solutions of the present disclosure can be realized with a software, specifically, a mode of computer program can be used for realization. For example, an executable codes can be stored in RAM, ROM, harddisk and/or any other suitable storage media, when the executable codes are executed, functions mentioned in the above embodiments of the present disclosure can be realized. It has to be noted that the implementation mode of the present disclosure can also be realized by hardware, or combination of software and hardware. Hardware part may be realized by dedicated logic; software part can be stored in a memory and executed by a suitable instruction execution system such as a micro processor or a specially designed hardware. A common technical person in the art can understand that the above surveillance camera device can be realized by using computer executable instructions and/or control codes contained in a processor, for example, such codes can be provided in carrier mediums such as magnetic disc, CD or DVD-ROM, in programmable memories such as read-only memory (firmware) and in data carrier such as optical or electronic signal carriers. The device and modules thereof in the present disclosure can be realized by hardware circuits such as very large scale integrated circuit or gate array, semi-conductors such as logic chip and transistor, or programmable hardware devices such as field-programmable gate array and programmable logic device, also by software that are executed by various types of processors, and also by combination of the above hardware circuit and software such as firmware. For example, when a surveillance camera provided in an embodiment of the present disclosure is realized by a hardware, the processor 20 can be a large scale integrated circuit board, the alarm unit therein can be a relay device for generating electric signal representing alarm information and the network module can be commercially available network card device that supports wired network connection and/or wireless network connection.

FIG. 6 is a schematic diagram of a surveillance camera provided in another embodiment of the present disclosure. As illustrated in FIG. 6, an AC/DC conversion power 120 or battery (independent device) is used for supplying power to the whole surveillance camera, and the surveillance camera further comprises: a display device 70 connected with a processor 20 , configured to display current working state of the surveillance camera; a loudspeaker module 80 connected with the processor 20, configured to produce an alarm sound upon receiving a triggering signal; an infrared illumination module 90 connected with the processor 20, for fill-in infrared illumination at a surveillance area under a state of night vision or that illumination condition is not favorable, so as to improve video acquisition quality; a rotary module 100 connected with the processor 20, configured to achieve rotation of the surveillance camera around its own axle, in an embodiment of the present disclosure, the rotary module 100 consists of a micro motor and a corresponding drive mechanism and can drive a movement detection module 10 to rotate 360 degree; an external interface module 110 connected with the processor 20, for insertion of an external device to transmit data. The external interface module 110, for example, can be USB interface for insertion of a memory device such as U-disc so as to transmit video/audio data to the memory device, or a wired interface for being connected to a wired network to access to internet so as to compete data uploading when failure occurs to the network module supporting wireless transmission.

One or several of the display module 70, the loudspeaker module 80, the infrared illumination module 90, the rotary module 100 and the wired interface module 110 described above can be optionally included according to actual needs, or none of them is included, and the present disclosure is not limited thereto. In addition, it should be fully appreciated that, in order not to make the implementation mode of the present disclosure ambiguous, only critical and necessary contents are described.

What are described above is merely preferable embodiments of the disclosure and not limitative to the scope of the disclosure; any amendment or equivalent replacement, etc. within the spirit and principle of the present disclosure, should be covered in the protection scope of the present disclosure.

## Claims

1. A surveillance camera, comprising:
a processor; and
a movement detection module, a video acquisition module, a storage module and a network module that are respectively connected with the processor,
wherein the movement detection module comprises a pyroelectric infrared sensor and a Doppler radar detector, the pyroelectric infrared sensor outputs a pyroelectric infrared signal upon detecting infrared image information, and the Doppler radar detector outputs a Doppler reflection signal upon detecting Doppler reflection image information.

2. The surveillance camera according to claim 1, further comprising a micro control unit which performs logical calculus for the pyroelectric infrared signal outputted by the pyroelectric infrared sensor and the Doppler reflection signal outputted by the Doppler radar detector and transmits a triggering signal to the processor if a calculus result satisfies a preset condition.

3. The surveillance camera according to claim 2, wherein the micro control unit is connected with the movement detection module and the processor.

4. The surveillance camera according to claim 2, wherein the micro control unit is integrated in the movement detection module or the processor.

5. The surveillance camera according to any of claims 2-4, wherein the processor comprises a signal transmission unit, a data transmission unit and an alarm unit, the signal transmission unit is configured to receive a triggering signal transmitted by the micro control unit and transmit an acquisition instruction to the video acquisition module upon receiving the triggering signal and inform the alarm unit to generate alarm information; the data transmission unit is configured to receive video data within a surveillance scenario from the video acquisition module and transmit the video data to the storage module for saving; the alarm unit is configured to transmit the alarm information to a terminal user via the network module.

6. The surveillance camera according to any of claims 2-5, further comprising an audio acquisition module, the signal transmission unit further transmits an acquisition instruction to the audio acquisition module upon receiving the triggering signal; and the data transmission unit is further configured to receive audio data within the surveillance scenario from the audio acquisition module.

7. The surveillance camera according to claim 6, wherein the audio acquisition module comprises an audio acquisition sensor and an audio compression unit.

8. The surveillance camera according to any of claims 1-7, wherein the Doppler radar detector comprises a radar transmission and reception circuit and a signal amplification circuit.

9. The surveillance camera according to any of claims 1-8, wherein the storage module is a local memory or a cloud server.

10. The surveillance camera according to any of claims 1-9, wherein the video acquisition module comprises an optical image sensor and an image compression unit.

11. The surveillance camera according to any of claims 1-10, further comprising at least one of a display module, a loudspeaker module, an infrared illumination module, a rotary module and an external interface module respectively connected with the processor, wherein:
the display module is configured to display a current working state of the surveillance camera;
the loudspeaker module is configured to generate an alarm sound upon receiving a triggering signal;
the infrared illumination module is for fill-in infrared illumination at a surveillance area under a state of night vision or that illumination condition is not favorable;
the rotary module is configured to achieve rotation of the surveillance camera around its own axle center; and
the external interface module is for insertion of an external device for data transmission.

12. The surveillance camera according to any of claims 1-10, further comprising a rotary module, wherein the rotary module comprises a micro motor and a dive mechanism that drives the movement detection module to rotate 360 degree.
